# EUROPEAN PATENT APPLICATION

(11) **EP 2 369 592 A2**
(43) Date of publication of application: **28.09.2011**
(21) Application number: 11002259.7
(22) Date of filing: 18.03.2011
(51) Int. Cl.: G11B 33/14, G11B 17/056

(54) **Optical disc drive**

(30) Priority: 23.03.2010 KR 20100025714; 15.09.2010 KR 20100090304
(71) Applicant: Hitachi-LG Data Storage Korea, Inc., Geumcheon-gu Seoul 153-803 (KR)
(72) Inventor: Lee, Jaesung, Seoul 153-803 (KR)
(74) Representative: Katérle, Axel

(57) **Abstract**

An optical disc drive is disclosed. The optical disc drive comprises an optical pickup base including an optical pickup movable in the radius direction of an optical disc; and a main base holding the optical pickup base, wherein the main base comprises a guide rib protruding from the main base and guiding the air flow generated by the rotation of the optical disc to the optical pickup. Further, the optical pickup comprises an air spoiler for preventing contamination of an objective lens included in the optical pickup. The optical disc drive is able to control the temperature of an optical pickup unit by guiding the air flow generated by the rotation of an optical disc to the optical pickup. Moreover, the optical disc drive can reduce contamination of the objective lens of the optical pickup due to the air flow generated by the rotation of the optical disc.

## Description

This nonprovisional application claims priority
on Patent Applications No. 10-2010-0025714 and 10-2010-0090304 filed in Republic of Korea on March 23, 2010 and September 15, 2010 the entire contents of which are hereby incorporated by reference.

### BACKGROUND

### Field

This document relates to an optical disc drive, and more particularly, to an optical disc drive which is able to control the temperature of an optical pickup unit by guiding the air flow generated by the rotation of an optical disc to the optical pickup unit.

### Related Art

In general, an optical disc drive (ODD) refers to a device that uses a laser to write data or read data on optical discs of various types such as CD, DVD, and BD.

An optical disc is advantageous in that it is handy to carry around despite its large capacity. Moreover, while optical discs were writable only once in the past, optical discs capable of repetitively rewriting have been used in recent years and there is an increasing trend towards convenience.

An optical disc drive for writing or reading data on an optical disc holds an optical disc therein to write or read data, for example, by placing the optical disc on a tray. The optical disc held in the optical disc drive rotates by a torque transmitted from a spindle motor. When the optical disc rotates, an optical pickup moves in the radius direction of the optical disc to write information on the optical disc or read written information.

### SUMMARY

An aspect of this document is to provide an optical disc drive which is able to control the temperature of an optical pickup unit by guiding the air flow generated by the rotation of an optical disc to the optical pickup unit.

Another aspect of this document is to provide an optical pickup which can reduce the contamination of an objective lens of the optical pickup due to the air flow generated by the rotation of an optical disc.

In an aspect, an optical disc drive comprises: an optical pickup base including an optical pickup movable in the radius direction of an optical disc; and a main base holding the optical pickup base, wherein the main base comprises a guide rib protruding from the main base and guiding the air flow generated by the rotation of the optical disc to the optical pickup.

In an embodiment, when the main base is divided into an upper portion including a rotating plane of the optical disc and a lower portion where the optical pickup base is positioned with respect to the thickness of the main base, the guide rib is provided at one side of the lower portion and is formed in a direction substantially at right angles to the air flow.

In an embodiment, the guide rib is positioned at the left when viewed from the front surface of the optical disc drive.

In an embodiment, a reinforcement rib is provided on a boundary of the upper and lower portions so as to be substantially in parallel to the rotating plane of the optical disc in the back and forth direction of the main base along the boundary, and the reinforcement rib has a guide through hole penetrating the reinforcement rib so that the air flow in the upper portion continues to the lower portion.

In an embodiment, the optical pickup comprises an air spoiler, and the air spoiler is positioned at the left of the optical pickup when viewed from the front surface of the optical disc drive and positioned at the inner circumference of the optical pickup.

In an embodiment, the air spoiler is formed in the shape of a protrusion in the upper side when viewed from a side of the optical pickup.

In an embodiment, the air spoiler is formed in the optical pickup, further outward than an arc contacting the spindle motor, and protrudes in the tangent direction of the contour of the spindle motor near the end of the arc contacting the spindle motor.

In another aspect, an optical pickup comprises: an objective lens for irradiating a laser beam on a disc; and an air spoiler for preventing contamination of the objective lens.

In an embodiment, the air spoiler is positioned at the inner circumference of the optical pickup where the optical pickup is in contact with the spindle motor and at the left of the optical pickup when viewing the object lens from the spindle motor.

In an embodiment, the air spoiler is formed in the shape of a protrusion in the upper side when viewed from a side of the optical pickup.

In an embodiment, the air spoiler is formed in the optical pickup, further outward than an arc contacting the spindle motor, and protrudes in the tangent direction of the contour of the spindle motor near the end of the arc contacting the spindle motor.

An optical disc drive according to the present invention is able to control the temperature of an optical pickup unit by guiding the air flow generated by the rotation of an optical disc to the optical pickup unit.

Moreover, the optical disc drive according to the present invention can reduce the contamination of a lens of an optical pickup due to dust, and hence prevent performance deterioration of the optical pickup and efficiently avoid errors occurred when writing or playing back data.

### BRIEF DESCRIPTION OF THE DRAWINGS

FIG. 1 is an exploded perspective view of an optical disc drive according to a first exemplary embodiment of the present invention.

FIG. 2 is a perspective view of a main base of FIG. 1 viewed from the bottom.

FIG. 3 is a view showing the air flow of the main base of FIG. 1 viewed from the top.

FIG. 4 is a view showing the air flow of the main base of FIG. 1 viewed from the bottom.

FIG. 5 is a view showing the air flow in the cross section of the main base of FIG. 2.

FIG. 6 is an experimental diagram showing the air flow of the main base of FIG. 2.

FIG. 7 illustrates an example of use of sponge for preventing the entry of dust into an optical disc drive.

FIGS. 8 and 9 illustrate the movement trajectory of dust inside a general optical disc drive.

FIG. 10 is a perspective view showing an optical pickup having an air spoiler according to a second exemplary embodiment of the present invention.

FIGS. 11 to 14 illustrate experimental results according to the second exemplary embodiment of the present invention.

### DETAILED DESCRIPTION

The above objects, characteristics, and merits of this document will become more apparent from the following detailed description taken in conjunction with the accompanying drawings. This document can be modified in various ways and can have several embodiments. Hereinafter, some of the embodiments are shown in the accompanying drawings and described in detail with reference to the drawings. The same reference numerals, as a general rule, designate the same elements throughout the specification. Further, a detailed description of the known functions or constructions will be omitted if it is deemed to make the gist of this document unnecessarily vague. It is also to be noted that numbers (e.g., first and second) used in the description of this document are only identification symbols for distinguishing one element from the other element. The above and other objects, features and advantages of the present invention will become apparent from the following detailed description taken with the accompanying drawings. As the invention allows for various changes and numerous embodiments, particular embodiments will be illustrated in the drawings and described in detail in the written description. Like reference numerals designate like elements throughout the specification. In the following description, detailed descriptions of well-known functions or constructions will be omitted since they would obscure the invention in unnecessary detail.

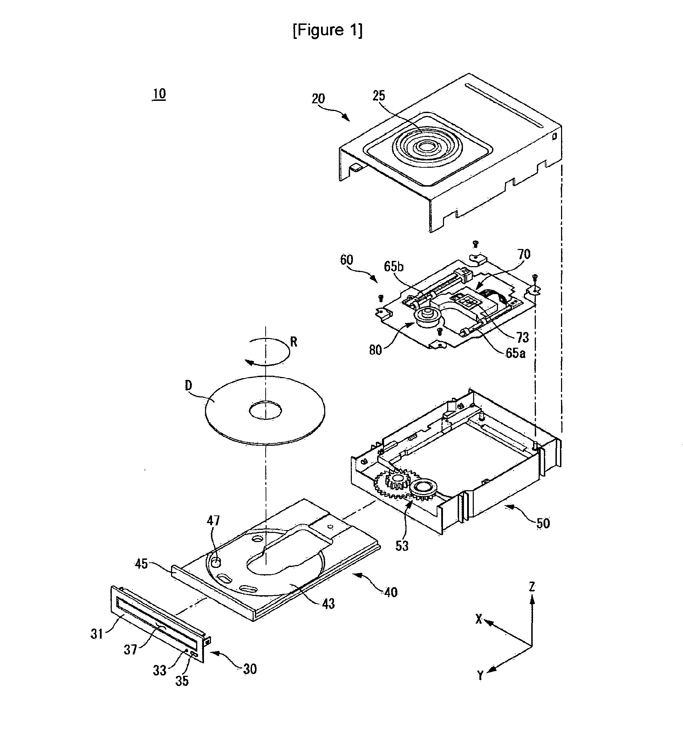

FIG. 1 is an exploded perspective view of an optical disc drive according to a first exemplary embodiment of the present invention.

As shown therein, an optical disc drive 10 according to a first exemplary embodiment of the present invention may comprise a housing 20 forming the exterior, a bezel 30 coupled to a front surface of the housing 20, a tray 40 holding an optical disc D and carrying it in and out of the optical disc drive 10, a main base 50 holding the tray 40, and an optical pickup base 60 to be held in the main base 50.

The housing 20 is a cabinet forming the exterior of the optical disc drive 10. The housing 20 requires a certain degree of rigidity in order to protect various kinds of equipment, optical parts, and electronic devices held therein Moreover, the housing 20 needs to be made of an easily moldable material. To satisfy these requirements, the cabinet 20 may be made of metal or strengthened engineering plastic.

Meanwhile, as the optical disc D rotates at high speed in the optical disc drive, a fluid mechanical force may be applied to the optical disc D. That is, a force for moving the optical disc D up, down, left, and right from a normal position may be generated by the flow of air generated in the optical disc D rotating at high speed. To suppress the generation of the force for moving the optical disc D, an uneven portion 25 may be formed on the housing 20. The uneven portion 25 may be provided in a corrugated shape on the surface of the housing 20. With the uneven portion 25 having a corrugated shape, the flow of air caused by the rotation of the optical disc D can be properly suppressed.

The bezel 30 may form the front surface of the optical disc drive 10. As the other surface of the optical disc drive 10 is positioned inside a personal computer PC or game machine, it may not be exposed to a user under a general use environment. However, the bezel 30 positioned on the front surface of the optical disc drive 10 is a portion exposed to the user. Since the front surface 31 of the bezel 30 exposed to the user forms the exterior of the product, a variety of finishes or decorations may be added thereto. Moreover, a lamp 33 indicating an operating condition of the optical disc drive 10 and a button 35 for operating the optical disc drive 10 may be provided on the front surface 31. A slot 37 may be formed in the bezel 30. The tray 40 may move back and forth while passing through the slot 37. Thus, the size and shape of the slot 37 may correspond to the size and shape of the tray 40. A bezel door (not show) is provided at the slot 37 to selectively open and close the slot.

The tray 40 is movable in a parallel manner and moves back and forth of the optical disc drive 10. That is, the tray 40 is carried into the housing 20 as it moves back, or carried out of the housing 20 as it moves forth. The optical disc D is mounted on the tray 40, and the optical disc D mounted on the tray 40 and pulled into the housing 20 is chucked to a spindle motor unit 80 and rotated. The tray 40 may comprise an optical disc mounting portion 43 receiving the optical disc D and a tray door 45 provided on the front surface of the optical disc mounting portion 43.

The optical disc mounting portion 43 is a portion having a stepped configuration formed in a circular shape similar to the shape of the optical disc D at the center of the tray 40. With the optical disc mounting portion 32 having a stepped configuration, the optical disc D placed on the optical disc mounting portion 43 is prevented from being moved during movement of the tray 40. Through holes 47 may be disposed to reduce air flow and noise when the optical disc D is chucked to the spindle motor unit 80 and rotated at high speed.

The main base 50 is a portion that receives various parts of the optical disc drive 10. Various bosses or holes may be provided on the main base 50 so as to couple various parts together. Moreover, these bosses or holes may be installed in such a way as to reduce noise and air flow that may be generated in the operation process of the optical disc drive 10. Because of its rather complicated configuration having various bosses and holes, the main base 50 may be made by plastic injection molding.

A tray loading portion 53 may be provided at the front end of the main base 50. The tray loading portion 53 may be made up of a combination of gears that transmit the force generated from a loading motor (not shown). The torque transmitted through the tray loading portion 53 is transmitted to a rack gear (not shown) provided on the bottom surface of the tray 40, thereby allowing the tray 40 to be loaded and unloaded back and forth.

The optical pickup base 60 may be received in the main base 50. The optical pickup base 60 may comprise an optical pickup unit 70 and a spindle motor unit 80. The optical pickup base 60 may be provided with shafts 65a and 65b. The optical pickup unit 70 may be guided by the shafts 65a and 65b and moved back and forth of the optical pickup base 60.

The optical pickup unit 70 is a portion that substantially writes data on the optical disc D or reads data from the optical disc D. Data writing and reading can be done as a laser beam is irradiated on the optical disc D through an objective lens 73 of the optical pickup unit 70 or the irradiated laser beam is reflected and sent back.

The spindle motor unit 80 transmits the torque generated from a spindle motor (not shown) to the optical disc D and rotates the optical disc D. When the optical disc D is mounted and then loaded into the tray 40, the optical disc D can be chucked to the spindle motor unit 80. Once the optical disc D is chucked to the spindle motor unit 80, the optical disc D is spaced a predetermined distance apart from the tray 40.

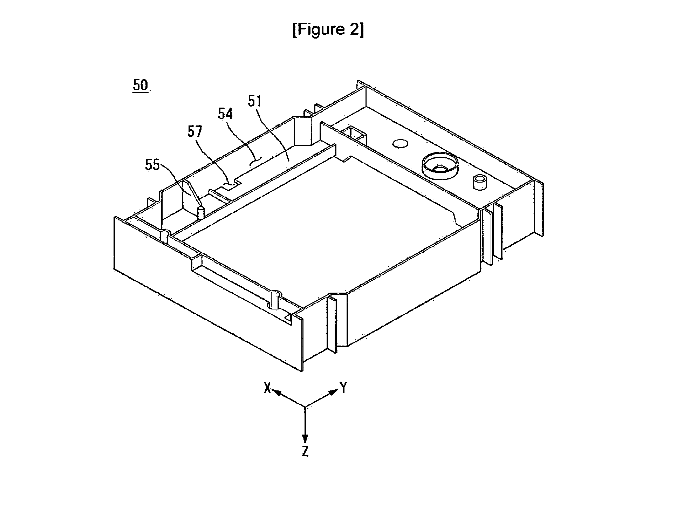

FIG. 2 is a perspective view of the main base of FIG. 1 viewed from the bottom.

As shown therein, the main base 50 according to the first exemplary embodiment of the present invention may have a guide rib 55 and a guide through hole 57.

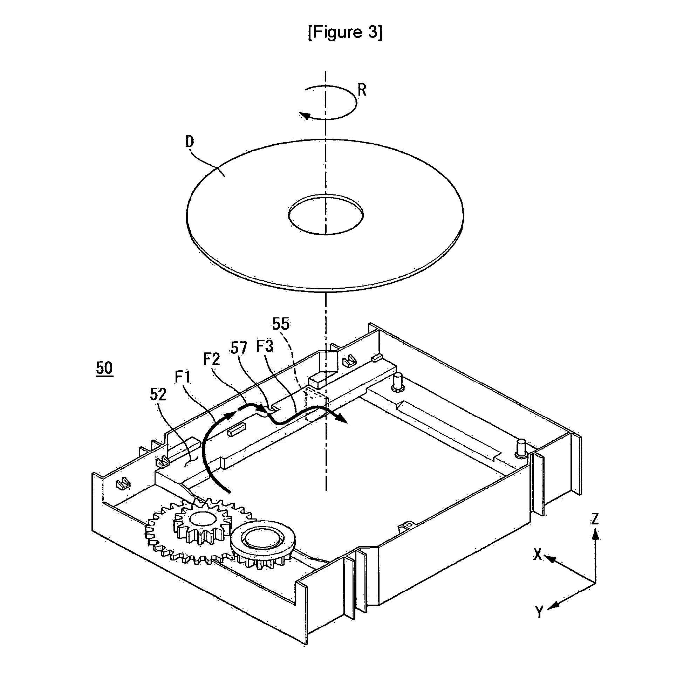

The guide rib 55 may be formed in a direction at right angles to the longitudinal direction of a bottom portion of the main base 50. A reinforcement rib 51 may be provided midway through the thickness of the main base 50. The reinforcement rib 51 may be provided substantially in parallel with the plane of the optical disc D (of FIG. 3) at one side of the main base 50. By providing the reinforcement rib 51, it is expected that distortion of the main base 50 can be prevented. Since the reinforcement rib 51 is provided midway through the main base 50, the main base 50 can be divided into an upper portion 52 (of FIG. 3) and a lower portion 54 with respect to the thickness. According to this division, it can be seen that the loaded optical disc D (of FIG. 3) is positioned at the upper portion 52 (of FIG. 3) and the guide rib 55 is positioned at the lower portion 54.

An optical pickup unit 70 (of FIG. 1) may be situated near the lower portion 54 at which the guide rib 55 is positioned. That is, when the optical pickup unit 70 (of FIG. 1) is in a standby state, or accesses data on the outer circumference side of the optical disc D, the optical pickup unit 70 (of FIG. 1) is positioned in the vicinity of the guide rib 55. The optical pickup unit 70 may be overheated in the operation process of laser radiation. If heat generated in the optical pickup unit 70 is not effectively distributed, the parts, for example, a prism, the objective lens 73, and an actuator, of the optical pickup unit 70 may be affected. That is, if such optical parts or mechanical parts reach above a certain temperature, this may have an adverse effect on the writing or playback performance of the optical pickup unit 70.

The guide rib 55 can guide the flow of air generated by the rotation of the optical disc D (of FIG. 3) in the direction of the optical pickup unit 70, particularly, in the direction of the objective lens 73. When the optical disc D (of FIG. 3) rotates clockwise R (of FIG. 3), the air flow is naturally directed clockwise R (of FIG. 3) which is the rotating direction of the optical disc drive D (of FIG. 3). If a strong air flow is generated, this may cause noise. Accordingly, it is common that the air flow issue demands a solution for alleviating or eliminating noise.

However, the optical disc drive 10 (of FIG. 1) according to the first exemplary embodiment of the present invention can adjust the temperature of the optical pickup unit 70 by using an air flow. That is, when the optical disc D (of FIG. 3) starts to rotate, an air flow is generated along an outer circumference of the inside of the main base 50. After an air flow is generated, the direction of the air flow can be switched by the guide rib 55. That is, the air rotating in the direction of the inside of the main base 50 can be switched to the direction of the optical pickup unit 70 as it is interfered by the guide rib 55 disposed substantially at right angles to the air flow. The air switched to the direction of the optical pickup unit 70 can prevent the optical pickup unit 70 from going above a certain temperature. That is, it is expected that the optical pickup unit 70 can be cooled by supplying a relatively low-temperature air toward the optical pickup unit 70. When the temperature of the optical pickup unit 70 becomes stable in a certain range by means of the guide rib 55, it is possible to prevent the optical pickup unit 70 from malfunctioning due to a temperature increase.

The guide through hole 57 may be provided in the upstream side of the guide rib 55. The guide through hole 57 can allow an air flow to be directed to the reinforcement rib 51. In general, the optical disc D (of FIG. 3) rotates above the reinforcement rib 51. That is, the optical disc D (of FIG. 3) rotates in an upper side of the main base 50 when viewed in the vertical direction Z of the main base 50. As the optical disc D (of FIG. 3) rotates at the upper portion 52 (of FIG. 3) disposed on the upper side of the main base 50, the air flow may not be delivered to the guide rib 55 provided at the lower portion 54 of the main base 50. The guide through hole 57 formed in the vertical direction Z of the reinforcement rib 51 can allow the air flow formed in the upper side of the main base 50 to be naturally connected toward a lower side of the main base 50.

FIG. 3 is a view showing the air flow of the main base of FIG. 1 viewed from the top.

As shown therein, the air flow in the optical disc drive 10 (of FIG. 1) according to the first exemplary embodiment of the present invention can be generated by the optical disc D rotating in the space of the upper portion 52 of the main base 50.

The optical disc D can rotate clockwise R. It can be said that, when viewed from the air-flow direction, the guide rib 55 is in the upstream side of the rotating direction R of the optical disc D. That is, when viewed in the back and forth direction Y of the main base 50, the air flow direction may be identical to the rotating direction R of the optical disc D. With this taken into consideration, it can be said that the left side in the back and forth direction Y is the upstream side of the rotating direction R of the optical disc D and the right side in the back and forth direction Y is the downstream side of the rotating direction R of the optical disc D.

When the optical disc D rotates clockwise E, this may generate a first flow F1. The first flow F1 may be an air flow that rotates along an inner wall surface of the main base 50. That is, the first flow F1 may be an air flow that rotates inside the main base 50 clockwise R equal to the rotating direction of the optical disc D. Part of the air forming the first flow F1 and moving in the upper portion 52 may form a second flow F2 that moves in the direction of the guide through hole 57.

The second flow F2 is an air flow in which part of the first flow F1 passes through the guide through hole 57. Since the air flow passes through the guide through hole 57, it is directed from the upper portion 52 toward the lower portion 54 (of FIG. 2). The second flow F2 having moved through the guide through hole 57 is interfered by the guide rib 55 and may form a third flow F3.

The third flow F3 is formed as the travel direction of the second flow F2 is changed by collision with the guide rib 55. The air may form the third flow F3, and be directed toward the center of the main base 50. The objective lens 73 of the optical pickup unit 70 may be positioned at the center of the main base 50. Therefore, the temperature of the optical pickup unit 70, particularly, the temperature of the objective lens 73 may be adjusted by the third flow F3.

In general, the optical pickup unit 70 is positioned on the opposite side of the slot 37, i.e., on the back of the optical disc drive with respect to the spindle motor (or back and forth direction), and the optical disc D rotates clockwise. Thus, it is advantageous that the guide rib 55 is provided at the left of the main base 50 when viewing the optical pickup unit 70 or the spindle motor from the front surface of the optical disc drive, i.e., the slot 37.

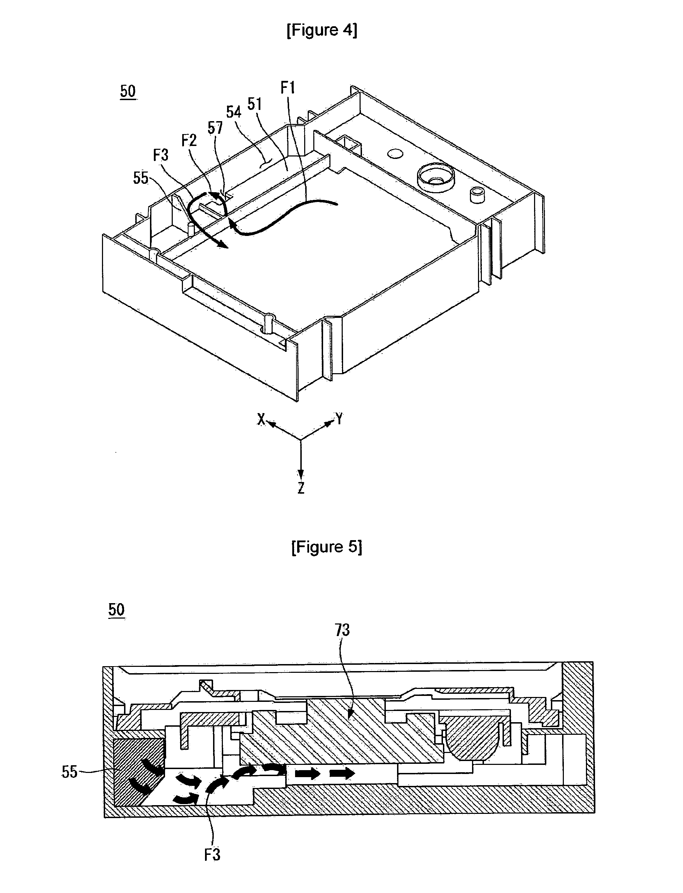

FIG. 4 is a view showing the air flow of the main base of FIG. 1 viewed from the bottom.

As shown therein, the air flow generated in the optical disc D (of FIG. 3) is guided by the guide through hole 57 and the guide rib 55, and may form the first, second, and third flows F1, F2, and F3. It is expected that the third flow F3 can suppress a temperature increase of the optical pickup unit 70 because it forms the flow of air directed to the center of the main base 50.

FIG. 5 is a view showing the air flow in the cross section of the main base of FIG. 2.

As shown therein, the main base 50 according to the first exemplary embodiment of the present invention can guide the air flow generated by the optical disc D (of FIG. 3) in the direction of the optical pickup unit 70. That is, the temperature of the optical pickup unit 70 can be controlled to be in a predetermined range by directing the third flow F3 passing through the guide through hole 57 (of FIG. 4) in the direction of the optical pickup unit 70.

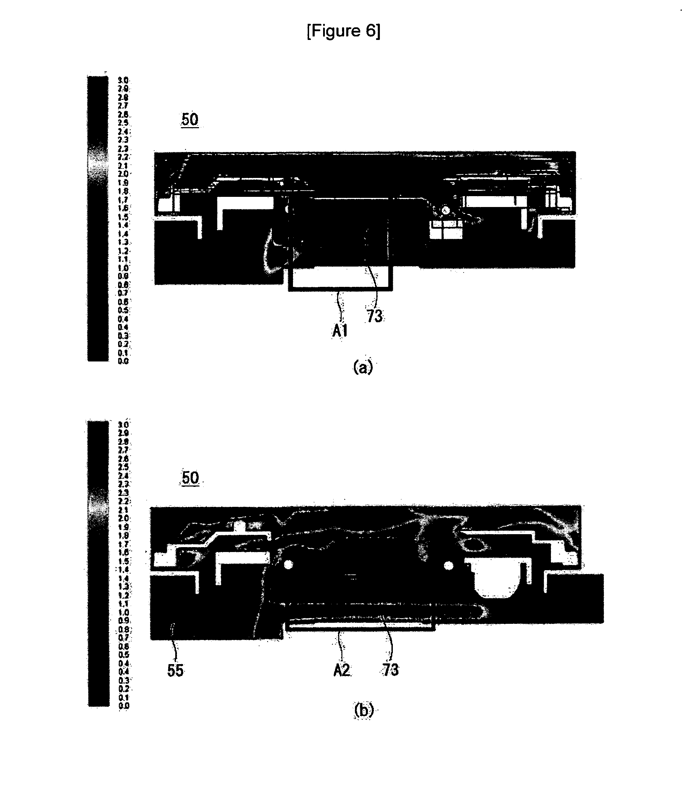

FIG. 6 is an experimental diagram showing the air flow of the main base of FIG. 2.

As shown therein, according to the first exemplary embodiment of the present invention, it can be experimentally proved that an air flow is generated inside the main base 50. The color of the inside of the main base 50 indicates the air flow rate at each location. That is, the closer the color is to blue, the closer the flow rate is to 0.0, and the closer the color is to red, the closer the flow rate is to 3.0.

FIG. 6 (a) illustrates the absence of the guide rib 55 (of FIG. 6(b)) according to the present invention. As shown therein, it can be seen that the first area A1 representing the optical pickup unit 70 portion is indicated in blue or a color close to it. That is, the absence of the guide rib (55 of FIG. 6(b)) indicates that there is almost no air flow in the optical pickup unit 70 portion. Because of an extremely low or no flow rate in the optical pickup unit 70 portion, the radiation of heat generated in the optical pickup unit 70 may be limited. Accordingly, the function of the optical pickup unit 70 may be limited by temperature conditions.

FIG. 6(b) illustrates the presence of the guide rib 55 according to the present invention. As shown therein, it can be seen that the second area A2 representing the optical pickup unit 70 portion is indicated in red. That is, the presence of the guide rib 55 indicates that an air flow is generated. Because of a strong air flow generated around the optical pickup unit 70, heat generated in the optical pickup unit 70 can be effectively distributed. Therefore, the limitation of the function of the optical pickup unit 70 imposed by temperature conditions can be prevented.

Although the positions of the guide rib and the guide through hole are specifically limited in the description of the above-stated exemplary embodiment, the positions of the guide rib and the guide through hole are not limited thereto but their specific positions may vary according to design requirements.

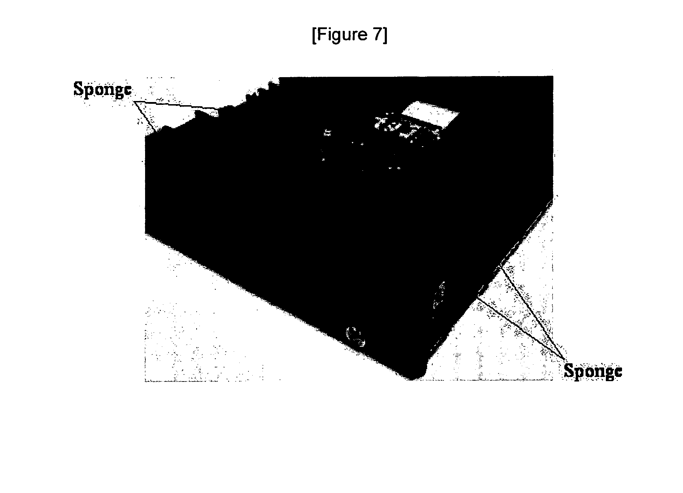

Meanwhile, the optical pickup unit (or simply referred to as an "optical pickup") is provided with various optical parts including an objective lens sensitive to impurities such as dust. In particular, in order to prevent an objective lens exposed to the outside from being contaminated, as shown in FIG. 7, sponge is attached to a side surface of the casing of the optical disc drive to prevent impurities such as dust from entering the inside of the optical disc drive.

However, during the opening and closing of a disc tray on which an optical disc is mounted, dust, etc. may enter the inside, and the objective lens may be contaminated with dust due to an air flow caused by the rotation of the disc. The use of the contaminated objective lens may lead to a deterioration in data writing and playback performance, and as a result cause errors.

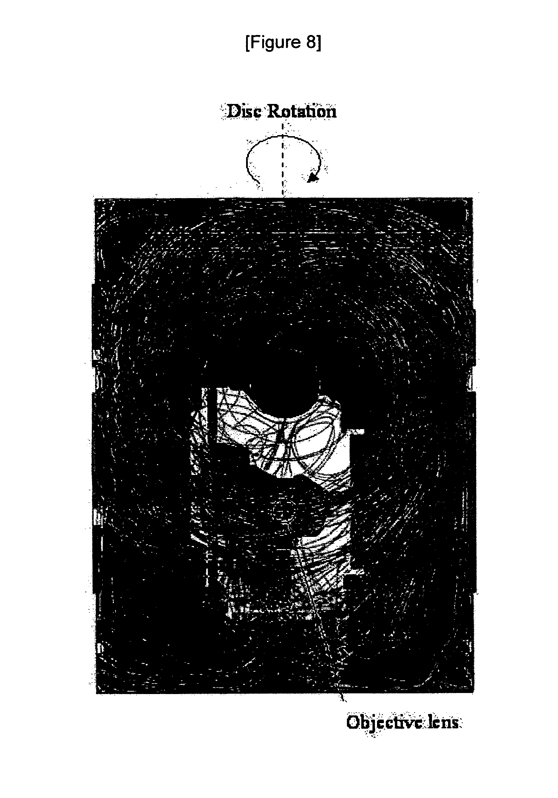

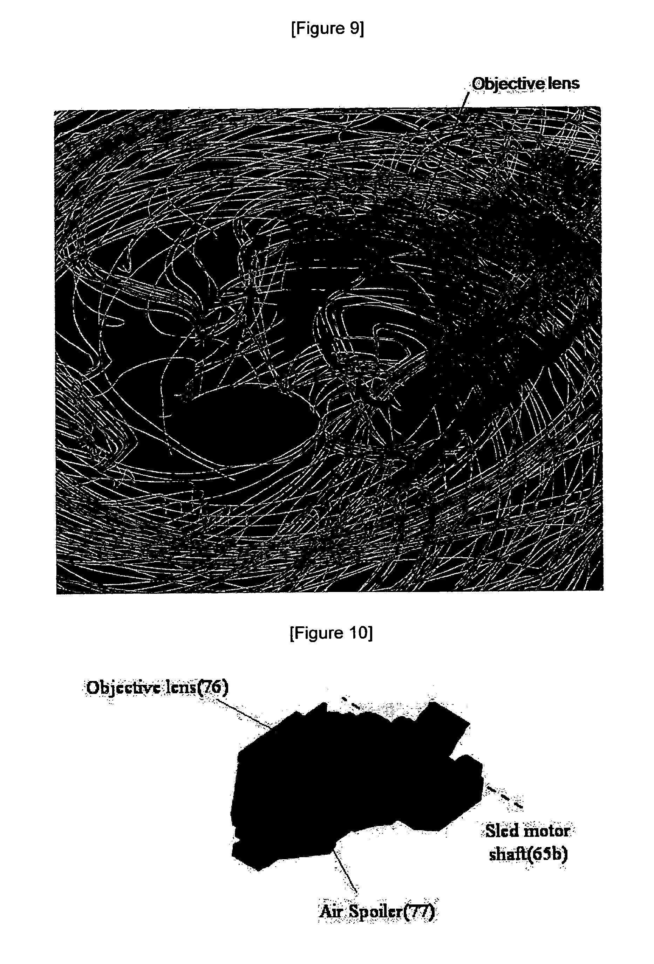

FIGS. 8 and 9 illustrate the trajectory of dust particles caused by the rotation of a disc. If an optical disc rotates at high speed, a speed (pressure) difference is generated between the upper and lower parts of the tray, and dust introduced into the lower part of the tray moves to the upper part of the tray through a pickup window provided on the tray and contaminates the objective lens. That is, as the trajectory of dust moving with the rotation of the disc is formed on the objective lens, the contamination of the objective lens is inevitable.

Moreover, the first exemplary embodiment of FIGS. 1 to 6 is adapted to control the temperature of the optical pickup unit by guiding an air flow generated by the rotation of the optical disc to the optical pickup unit, which may increase the possibility of contamination of the objective lens due to the increasing air flow toward the optical pickup unit.

Therefore, a second exemplary embodiment of the present invention suggests an optical pick which prevents the contamination of an exposed objective lens by changing the air flow directed to the objective lens of the optical pickup.

FIG. 10 is a perspective view showing an optical pickup having an air spoiler according to a second exemplary embodiment of the present invention.

The optical pickup 75 having an air spoiler comprises an objective lens 76 for focusing a laser beam onto a disc and an air spoiler 77 for preventing the objective lens 76 from being contaminated with dust.

The air spoiler 77 is placed, for example, in the opposite direction of a shaft 65b with a sled motor (not shown) attached thereto with respect to the center of the objective lens 76 as shown in FIG. 6, and is provided in the shape of a protrusion on a side surface of the optical pickup 75 facing a spindle motor (not shown) with respect to the inner and outer circumferences.

That is, the air spoiler 77 is formed in the shape of a rectangular protrusion on the optical pickup 75 so as to prevent the movement trajectory of dust moving upward from the bottom by the optical disc rotating clockwise from going above the objective lens 76. The air spoiler 77 is formed in the shape of a diagonal protrusion in the upper region, as viewed from a cross section of the optical pickup 75.

When viewing the optical pickup 75 from the spindle motor, FIG. 10 illustrates that the shaft 65b with the sled motor attached thereto is positioned at the right and the air spoiler 77 is positioned at the left; whereas, in case of another optical pick, the shaft with the sled motor attached thereto may be positioned at the left and hence the air spoiler may be positioned at the side of the shaft with the sled motor attached thereto.

As the disc rotates clockwise, the air in the optical disc drive, too, rotates clockwise and moves toward the optical pickup. Thus, it is advantageous that the air spoiler 77 is formed at the first position where the air rotating clockwise by the rotation of the disc collides with the optical pickup, that is, at the left of the optical pickup as viewed from the spindle motor and at a position facing the spindle motor, i.e., the inner circumference of the optical pickup, with respect to the inner and outer circumferences.

Moreover, since the optical pickup comes into contact with the spindle motor when moving to the innermost circumference, an arc contacting the spindle motor is formed at the inner circumference of the optical pickup. Therefore, the air spoiler 77 is formed at the inner circumference of the pickup, further outward than the arc contacting the spindle motor, and may protrude in the shape of a protrusion in the tangent direction of the contour of the spindle motor near the end of the arc contacting the spindle motor.

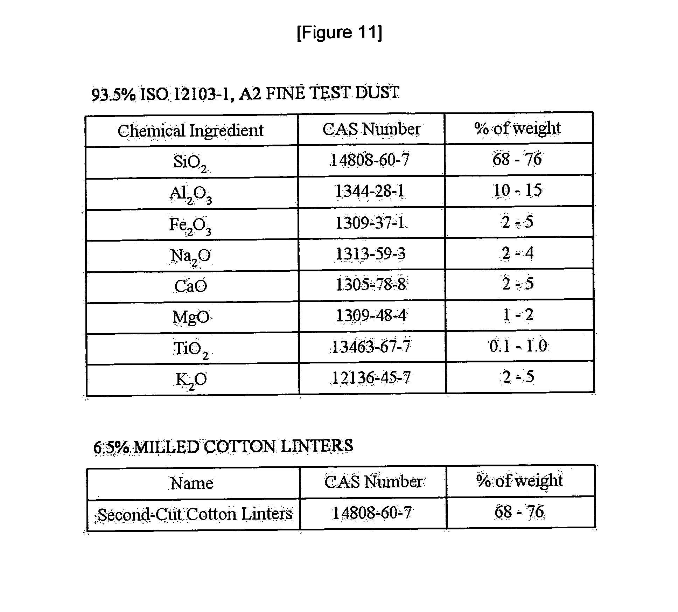

FIGS. 11 to 14 illustrate experimental results according to the second exemplary embodiment of the present invention.

The optical pickup 75 having the air spoiler of the present invention utilizes the concept of fluid mechanics of a rotating flow field generated by the highspeed rotation of an optical disc in the optical disc drive.

The internal flow rate during the operation of the optical disc drive is greater than several m/sec to several tens of m/sec, and as a result of a simulation analysis (e.g., CFD simulation), it was found that the flow near the optical pickup is drawing dust particles present in the interior by the rotation of the disc.

FIG. 11 illustrates a result of a CFD simulation under the condition of dust type: ANSI/ASHRAE 52.2P Test Dust: 93.5% ISO 12103-1, A2 Fine Test Dust, 6.5% milled cotton linters.

Dust particles introduced into the drive cause contamination of the objective lens as they rotate along the rotating direction of the optical disc, and in particular, it was confirmed that, as a result of analysis of the movement trajectory of the dust particles, the dust introduced to the lower part of the disc tray moved upward the objective lens and caused contamination of the objective lens.

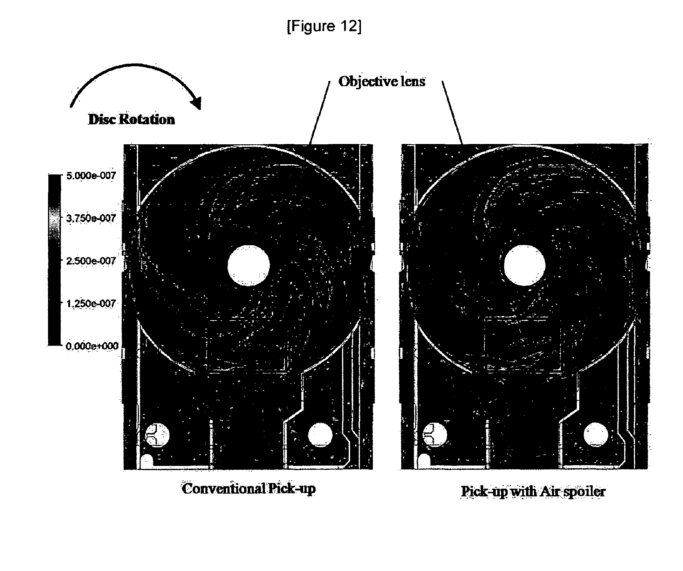

Accordingly, the air spoiler 77 is provided in the shape of a protrusion on a side surface of the optical pickup 75, as shown in FIG. 10, by taking the rotating flow field characteristics of the dust particles into consideration. As a result of application of the optical pickup 75 having the air spoiler 77 and the conventional optical pickup to the optical disc drive, it was confirmed that, as shown in FIG. 12, less dust particles were introduced in the vicinity of the objective lens 77 by the use of the optical pickup 75 having the air spoiler 77, as compared to the conventional pickup.

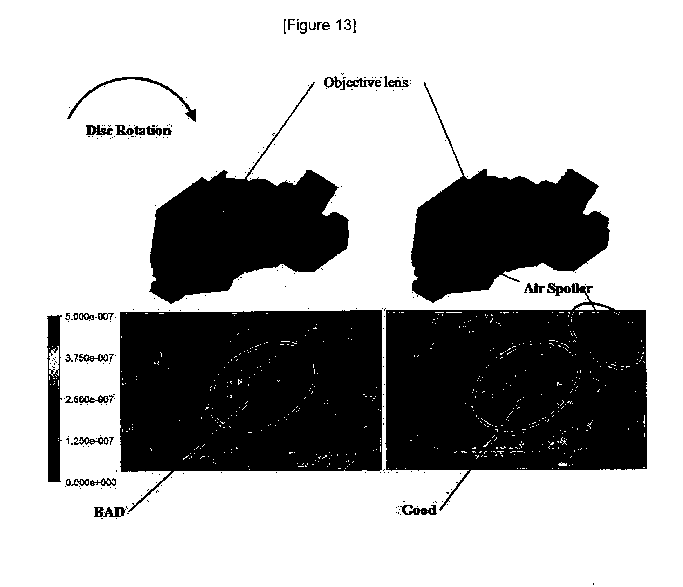

For instance, FIG. 13 is an enlarged view of part of FIG. 12, which depicts that the dust particles passing the area of the objective lens 76 of the optical pickup 75 having the air spoiler 77 are much less than the dust particles passing the area of the objective lens of the conventional optical pickup.

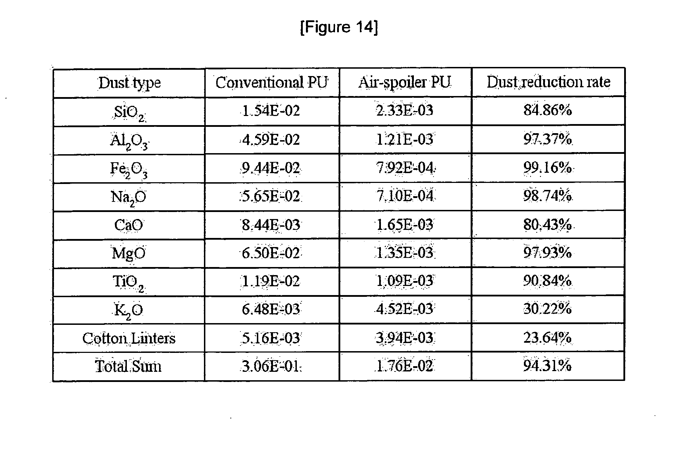

Moreover, by quantitatively calculating the rate of decrease of dust near the optical pickup, as shown in FIG. 14, it has turned out that the decrease of dust near the optical pickup 75 having the air spoiler 77 was observed, for the most part, near the optical pickup 75.

That is, the optical pickup 75 having the air spoiler 77 according to the second exemplary embodiment of the present invention can minimize the degree of contamination of the pickup lens caused by dust.

Although the first exemplary embodiment of the present invention for controlling the temperature of the optical pickup unit might encounter the problem that the air generated by the rotation of the optical disc is guided to the optical pickup and contaminates the objective lens, the problem encountered in the first exemplary embodiment can be solved by applying the second exemplary embodiment to the optical pickup. In other words, both the problem of the temperature of the optical pickup and the problem of contamination of the objective lens can be overcome by combining the first and second exemplary embodiments together.

While we have shown and described several embodiments in accordance with the present invention, it is understood that the same is not limited thereto but is susceptible of numerous changes and modifications as known to those skilled in the art, and we therefore do not wish to be limited to the details shown and described herein but intended to cover all such changes and modifications as are encompassed by the scope of the appended claims.

## Claims

1. An optical disc drive comprising:
an optical pickup base including an optical pickup movable in a radius direction of an optical disc; and
a main base holding the optical pickup base,
wherein the main base comprises a guide rib protruding from the main base and guiding air flow generated by a rotation of the optical disc to the optical pickup.

2. The optical disc drive of claim 1, wherein, when the main base is divided into an upper portion including a rotating plane of the optical disc and a lower portion where the optical pickup base is positioned with respect to a thickness of the main base, the guide rib is provided at one side of the lower portion and is formed in a direction substantially at right angles to the air flow.

3. The optical disc drive of claim 2, wherein the guide rib is positioned at left when viewed from a front surface of the optical disc drive.

4. The optical disc drive of claim 2, wherein a reinforcement rib is provided on a boundary of the upper and lower portions so as to be substantially in parallel to a rotating plane of the optical disc in a back and forth direction of the main base along the boundary, and
the reinforcement rib has a guide through hole penetrating the reinforcement rib so that the air flow in the upper portion continues to the lower portion.

5. The optical disc drive of claim 1, wherein the optical pickup comprises an air spoiler, and the air spoiler is positioned at left of the optical pickup when viewed from the front surface of the optical disc drive and positioned at inner circumference of the optical pickup.

6. The optical disc drive of claim 5, wherein the air spoiler is formed in a shape of a protrusion in an upper side when viewed from a side of the optical pickup.

7. The optical disc drive of claim 5, wherein the air spoiler is formed in the optical pickup, further outward than an arc contacting a spindle motor, and protrudes in a tangent direction of a contour of the spindle motor near an end of the arc contacting the spindle motor.

8. An optical pickup comprising:
an objective lens for irradiating a laser beam on a disc; and
an air spoiler for preventing contamination of the objective lens.

9. The optical pickup of claim 8, wherein the air spoiler is positioned at inner circumference of the optical pickup where the optical pickup is in contact with a spindle motor and at left of the optical pickup when viewing the object lens from the spindle motor.

10. The optical pickup of claim 9, wherein the air spoiler is formed in a shape of a protrusion in an upper side when viewed from a side of the optical pickup.

11. The optical pickup of claim 9, wherein the air spoiler is formed in the optical pickup, further outward than an arc contacting the spindle motor, and protrudes in a tangent direction of a contour of the spindle motor near an end of the arc contacting the spindle motor.
